(19) Europäisches Patentamt
European Patent Office
Office européen des brevets

(11) **EP 2 730 013 B1**

(12) **EUROPÄISCHE PATENTSCHRIFT**

(45) Veröffentlichungstag und Bekanntmachung des Hinweises auf die Patenterteilung:
**22.11.2017 Patentblatt 2017/47**

(51) Int Cl.:
*H02M 1/38* (2007.01)    *H02M 3/337* (2006.01)
*H02M 3/335* (2006.01)

(21) Anmeldenummer: **12731388.0**

(22) Anmeldetag: **26.06.2012**

(86) Internationale Anmeldenummer:
**PCT/EP2012/062301**

(87) Internationale Veröffentlichungsnummer:
**WO 2013/004542 (10.01.2013 Gazette 2013/02)**

(54) **ANSTEUERUNGSSCHALTUNG UND VERFAHREN ZUR ANSTEUERUNG DER EINGANGSSCHALTSTUFE EINER TRANSFORMATORSCHALTUNG**

CONTROL CIRCUIT AND METHOD FOR CONTROLLING AN INPUT SWITCHING STAGE OF A TRANSFORMER CIRCUIT

CIRCUIT DE COMMANDE ET PROCÉDÉ DE COMMANDE DE L'ÉTAGE DE COMMUTATION D'ENTRÉE D'UN CIRCUIT DE TRANSFORMATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.07.2011 DE 102011078579**

(43) Veröffentlichungstag der Anmeldung:
**14.05.2014 Patentblatt 2014/20**

(73) Patentinhaber: **Robert Bosch GmbH**
**70442 Stuttgart (DE)**

(72) Erfinder:
• **KOCH, Stefan**
**77876 Kappelrodeck (DE)**
• **TIAN, Jian**
**77815 Buehl (DE)**
• **BERGMANN, Ralf-Peter**
**77880 Sasbach (DE)**

(56) Entgegenhaltungen:
JP-A- 2008 263 735    US-A- 6 002 213
US-A1- 2008 019 153    US-A1- 2011 149 607

• **ABU-QAHOUQ J A ET AL: "Maximum efficiency point tracking (MEPT) method and dead time control", POWER ELECTRONICS SPECIALISTS CONFERENCE, 2004. PESC 04. 2004 IEEE 35TH ANNUAL, AACHEN, GERMANY 20-25 JUNE 2004, PISCATAWAY, NJ, USA,IEEE, US, 20. Juni 2004 (2004-06-20), Seite 3700, XP010738305, DOI: 10.1109/PESC.2004.1355130 ISBN: 978-0-7803-8399-9**

## Beschreibung

Bereich der Erfindung

Die vorliegende Erfindung betrifft eine Ansteuerungsschaltung und ein Verfahren zur Ansteuerung der Eingangsschaltstufe einer Transformatorschaltung. Insbesondere betrifft die Erfindung eine Ansteuerungsschaltung und dazugehöriges Verfahren, bei denen die Länge der Totzeit zwischen der Deaktivierung eines ersten Schaltzustands und der Aktivierung eines zweiten Schaltzustands der Eingangsschaltstufe einer Transformatorschaltung gesteuert wird.

Stand der Technik

Transformatoren mit einer vorgeschalteten Wechselrichterschaltung als Eingangsstufe werden in vielen Produkten und technischen Anwendungen eingesetzt, beispielsweise in Schaltnetzteilen. Dort wird eine Eingangsgleichspannung mittels einer Wechselrichterschaltung einem Transformator als Leistungsübertrager zugeführt, um ausgangsseitig eine Ausgangsspannung einem Verbraucher zuzuführen. Die Eingangsgleichspannung kann einer Gleichspannungsquelle oder einer gleichgerichteten Netzspannung entnommen sein. Die von dem Sekundärkreis des Transformators bereitgestellte Ausgangsspannung kann gleichgerichtet werden, um eine Gleichspannung auszugeben. Jedoch kann es in den Schalterelementen des Schaltnetzteiles zu Verlustleistungen kommen.

Die Wechselrichter-Eingangsstufe, welche primärseitig an den Transformator gekoppelt ist, weist je nach Bauart eines oder mehrere Schalterelemente auf. Die Wechselrichter-Eingangsstufe kann beispielsweise in einer Ausführung als Vollbrückenwandler vier Schalterelemente, beispielsweise Relais oder MOSFETs, aufweisen, die wechselseitig betrieben werden, um die Polarität einer momentan der Primärspule des Transformators zugeführten elektrischen Spannung mit der momentan gewählten Schaltfrequenz zu wechseln.

Es ist wünschenswert, die Schalterelemente während der jeweiligen Schaltvorgänge spannungsfrei zu betreiben, d.h. die Eingangsschaltstufe in einem Nullspannungsschaltenden Modus (Englisch: zero voltage switching) (ZVS) zu betreiben, um Verlustleistung zu reduzieren und die elektromagnetische Interferenz (EMI) einzuschränken und ein Brummen der Transformatorschaltung zu vermeiden. Aus diesem Grund werden die Schalterelemente zueinander verzögert mit einem gewissen zeitlichen Abstand, der sogenannten Totzeit, geschaltet. Während der Totzeit-Phase sind die Schalterelemente in einem geöffneten Zustand, so dass die Eingangsspannung nicht auf die Primärspule durchgeschaltet wird. Eine jeweils über die Schalterelemente anliegende Spannung Us kann während der Totzeit reduziert werden oder auf Null abgebaut werden.

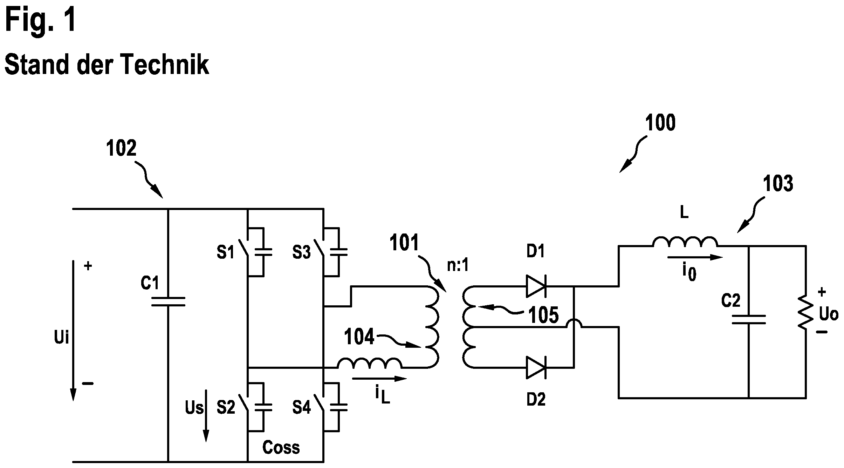

In Figur 1 ist eine beispielhafte Hauptkreisschaltung 100 mit einem Transformator 101 beschrieben. Die Hauptkreisschaltung 100 ist in der Regel mit mindestens einer Nebenkreisschaltung, beispielsweise einer Rückkopplungsschaltung, gekoppelt, die in Figur 1 nicht dargestellt ist. Eine Ansteuerungsschaltung, in Figur 1 ebenfalls nicht dargestellt, steuert die Schalterelemente S1, S2, S3, S4 an. Die Hauptkreisschaltung 100 weist primärseitig die Eingangsschaltstufe 102 auf, wobei in der Eingangsschaltstufe 102 jedes der Schalterelemente S1, S2, S3, S4 eine parallel geschaltete Ausgangskapazität Coss aufweist. Die Eingangsschaltstufe 102 wird von der Eingangsspannung Ui gespeist, welche je nach Schalterstellung der Schalterelemente S1, S2, S3, S4 mit wechselnder Polarität auf die Primärwicklung 104 des Transformators 101 durchgeschaltet wird. Die Schalter S1 bis S4 werden bevorzugt mit dem Schaltablauf des sogenannten Phase-Shifted-Modus geschaltet, wobei die Primärwicklung 104 des Transformators 101 über einen Vollbrückenwandler S1 bis S4 mit abwechselnder Polarität an die Eingangsspannung Ui angelegt wird und einer der diagonalen Schalter S1, S4; S3, S2 schon für eine bestimmte Zeit geschlossen ist, bevor der andere aktiviert wird. Die Schalterelemente S1, S2, S3, S4 sind beispielsweise MOSFETs.

Zwischen den Eingangsklemmen der Eingangsschaltstufe (102) ist eine Eingangskapazität C1 vorhanden. Ferner ist der Primärwicklung 104 optional eine Eingangsinduktivität vorgeschaltet, über welche der Primärstrom $I_L$ in die Primärwicklung 104 eingespeist wird. Die zwischen den Anschlüssen des Schalterelementes S1, S2 abfallende Spannung wird in der Figur 1 mit Us bezeichnet.

Der Hauptschaltkreis 100 weist einen Sekundärkreis 103 mit zwei Sekundärwicklungen 105 auf, die jeweils mit einer Diode D1 bzw. D2 gekoppelt sind zur Gleichrichtung des Sekundärwechselstroms Io. Die Induktivität L und die Kapazität C2 werden hier als Ausgangsfilter verwendet. Der Sekundärstrom bzw. Laststrom Io liefert eine sekundärseitige Ausgangsspannung Uo. Das Stromverhältnis des Transformators 101 ist n:1, wie in Figur 1 angedeutet. Dabei steht n:1 für das Verhältnis der Anzahl der Windungen der Primärwicklung 104 zu der Anzahl der Windungen einer der Sekundärwicklungen 105.

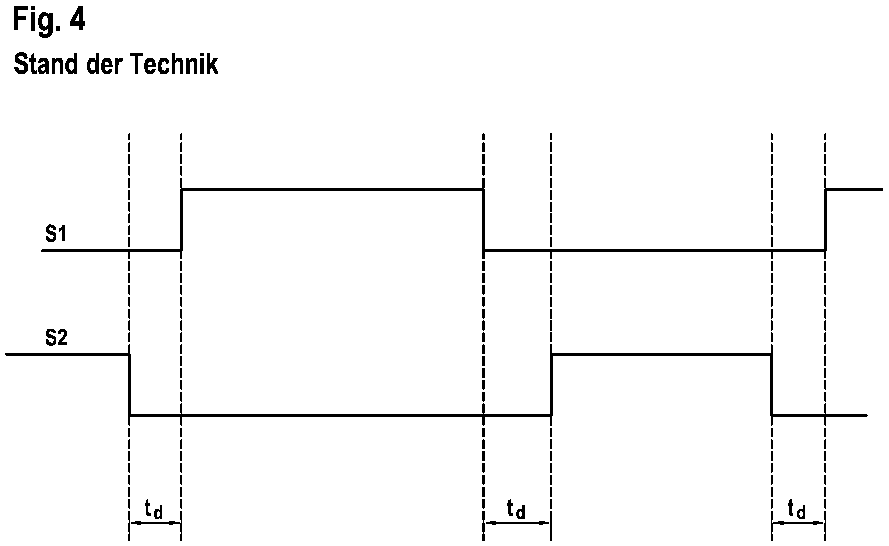

Damit die Verlustleistung der Schalter, beispielsweise aufgrund abwechselndem Entladen- und Aufladen der Schalterelement-Ausgangskapazitäten Coss reduziert wird, und zur Verbesserung der EMI-Eigenschaften, sollten die Schalterelemente S1, S2, S3, S4 spannungsfrei schaltend (ZVS) betätigt werden. Dabei sollte der ZVS-Betrieb über einen möglichst großen Bereich des Laststroms oder Ausgangsstroms Io beibehalten werden. Daher wird bei einer Änderungen des Primärstroms $I_L$ eine Totzeit td im allgemeinen frequenzabhängig angepasst. In Figur 4 wird ein Signalverlaufsdiagramm gezeigt, dass Ansteuerungsimpulse für die Schalterelemente S1, S2 aufweist, mit einer bestimmten Totzeit td, die wie bereits erwähnt entsprechend dem Laststrom lo oder dem Primärstrom $I_L$ geändert wird.

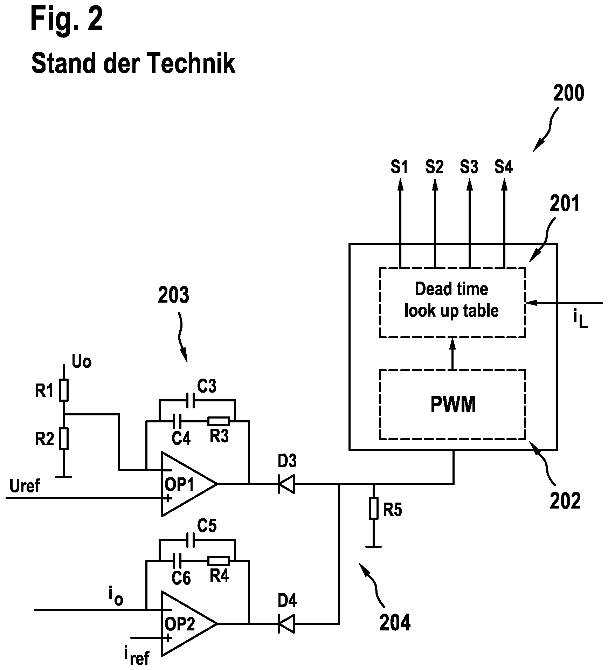

In Figur 2 wird ein Schaltdiagramm einer bekannten Ansteuerungsschaltung 200 gezeigt. Die Ansteuerungsschaltung 200 steuert beispielsweise die in Fig. 1 gezeigte Eingangsschaltstufe 102 an. Zum Betrieb der Ansteuerungsschaltung 200 wird der Transformatorstrom, d.h. der Primärstrom $I_L$ gemessen und der Ansteuerungsschaltung 200 mitgeteilt. Die Pulsweitenmodulationseinheit 202 erzeugt die Ansteuerungssignale für die primärseitigen Schalterelemente S1, S2, S3, S4, einschließlich einer Totzeitkompensierung.

Die Ansteuerungsschaltung 200 weist ferner eine Rückkopplungsschaltung mit einem ersten Teilschaltkreis 203, der mit der Ausgangsspannung Uo gekoppelt ist, und einem zweiten Teilschaltkreis 204, der mit dem Laststrom Io gekoppelt ist, auf. Der erste Teilschaltkreis 203 dient als Ausgangsspannungskompensator und enthält einen Operationsverstärker OP1, Kapazitäten C3, C4, den Widerstand R3, sowie die Diode D3. Ferner ist ein Eingang des Operationsverstärkers OP1 des ersten Teilschaltkreises 203 mit einer Referenzspannung Uref gekoppelt. Zwei Widerstände R1, R2 dienen als Spannungsteiler für die Ausgangsspannung Uo. Der zweite Teilschaltkreis 204 dient als Stromkompensator und enthält einen Operationsverstärker OP2, Kapazitäten C5, C6, den Widerstand R4, sowie die Diode D4. Der Operationsverstärker OP2 des zweiten Teilschaltkreises 204 ist mit einen Referenzstromsignal Iref gekoppelt. Am Ausgang werden die Ausgangssignale der beiden Teilschaltkreise 203, 204 zusammengeführt und über einem Widerstand R5 gegen Masse geschaltet und in die Pulsweitenmodulationseinheit 203 eingegeben.

Die Ausgangsspannung Uo kann mittels Variation der Referenzspannung Uref geändert werden. Der Laststrom Io wird begrenzt mittels des Referenzstroms Iref, der dabei als Begrenzungsgröße dient. Die Ansteuerungsschaltung 200 steuert die Schalterelemente S1, S2, S3, S4 aufgrund der Eingabe des Primärstromsignals $I_L$, unter Verwendung eines Kennfeldes bzw. einer Nachschlagetabelle (Englisch: lookup-table). Der nullspannungsschaltende Modus wird hierbei erreicht, indem die Länge der Totzeit td aus dem in dem Speicher 201 der Ansteuerungsschaltung 200 gespeicherten Kennfeld hergeleitet wird und die Ansteuerungssignale entsprechend angepasst werden.

Im Allgemeinen ist jedoch die Ausgangskapazität eines MOSFET eine Funktion der Source-Drain-Spannung, wobei genauer gesagt mit steigender elektrischer Spannung die Kapazität verringert wird, und umgekehrt. Bei der gezeigten bekannten Transformator-Verschaltung bedeutet dies, dass die Kapazitäten der Schalterelemente S1, S2, S3, S4 auf diese Weise von der Eingangsspannung Ui oder der Schalterspannung Us abhängig sind. Bei Ui Spannungsänderung ändert sich daher die Resonanzfrequenz. Zum Beispiel, bei einer Erhöhung der Gleichspannung Ui oder Us verringert sich die Resonanzfrequenz. Um dabei den Geringspannungs- oder Nullspannungs-schaltenden Modus (ZVS) beizubehalten, muss die Länge der Totzeit entsprechend der Erhöhung der Spannung reduziert werden.

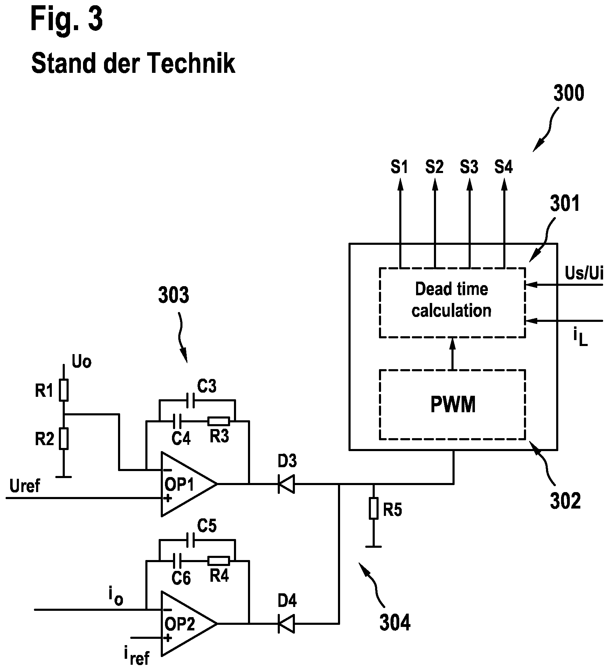

In Figur 3 ist eine weitere bekannte Ansteuerungsschaltung 300 gezeigt, die entsprechend dieser Erfordernisse modifizierte ist und eine Pulsweitenmodulationseinheit 302, eine Berechnungseinheit 301, und eine Rückkopplungsschaltung mit zwei Teilschaltkreisen 303, 304 aufweist. Die Länge der Totzeit td wird mittels der Berechnungseinheit 301 berechnet, wobei im Unterschied zu der in Figur 2 gezeigten Ansteuerung nicht nur der Transformator-Primärstrom $I_L$, sondern auch die Eingangsspannung Ui oder die Schalterspannung Us gemessen und in die Ansteuerungschaltung 300 eingegeben werden müssen. Dies ist teuer und aufwändig.

In der Druckschrift US 2010/0020569 wird ein resonant schaltender Leistungswandler mit anpassbarer Totzeitsteuerung beschrieben. Die Totzeit wird in Abhängigkeit von einer primärseitigen Eingangsspannung und einem primärseitigen Spulenstrom sowie der Schaltfrequenz eingestellt.

Aus dem Dokument XP010738305 ist eine Ansteuerungsschaltung für eine mit der Primärwicklung eines Transformators gekoppelte Eingangsschaltstufe zum Erzeugen einer Primärwechselspannung des Transformators aus einer Eingangsgleichspannung durch Wechseln zwischen zwei Schaltzuständen bekannt. Die Ansteuerungsschaltung ist dabei dazu eingerichtet, die Länge der Totzeit zwischen der Deaktivierung eines ersten Schaltzustands der Schaltzustände und der Aktivierung eines zweiten Schaltzustands der Schaltzustände zu steuern. Eine solche Ansteuerungsschaltung ist auch aus den Dokumenten JP 2008 263735 A, US 2011/149607 A1 und US 6 002 213 A bekannt.

Aus dem Dokument US 2008/019153 A1 ist eine Schutzvorrichtung für einen Halbbrückenwandler bekannt, wobei die Schutzvorrichtung mindestens ein Schaltelement umfasst, das während einer ersten Zeit betrieben wird, die mit einem Zeitpunkt beginnt, an dem eine Überlastung oder ein Kurzschluss in dem Halbbrückenwandler detektiert worden ist. Die Schutzvorrichtung umfasst ferner Schaltungen, die das Schaltelement derartig steuern, dass die von dem Halbbrückenwandler bereitstellbare Leistung während einer zweiten Zeit, die unmittelbar nach der ersten Zeit beginnt, minimiert wird.

Nachteilig an den Lösungen gemäß des Standes der Technik ist, dass die Anzahl der für die Totzeitsteuerung erforderliche Messungen bzw. die Anzahl der verschiedenen erforderlichen Sensoren einen hohen baulichen Aufwand mit sich bringt. Daraus folgt auch ein hoher Kostenaufwand.

Eine Aufgabe der Erfindung ist es, eine vereinfachte Ansteuerungsschaltung zur Totzeitsteuerung bereitzustellen, die auf eine zuverlässige Weise erlaubt, die Wandlerschaltung in einem nullspannungeschaltenden Modus zu betreiben, und die gleichzeitig mit wenig Messaufwand und kostengünstig einsetzbar ist.

Erfindungsgemäß wird eine Ansteuerungsschaltung für eine mit der Primärwicklung eines Transformators gekoppelte Eingangsschaltstufe bereitgestellt gemäß dem unabhängigen Anspruch 1. Ferner wird ein dazugehöriges Verfahren sowie eine Schaltnetzteil mit der erfindungsgemäßen Ansteuerungsschaltung gemäß den nebengeordneten unabhängigen Ansprüchen geschaffen.

Bevorzugte Weiterbildungen der Erfindung ergeben sich aus den abhängigen Ansprüchen.

Die erfindungsgemäße Ansteuerungsschaltung steuert eine Eingangsschaltstufe, die mit der Primärwicklung eines Transformators gekoppelt ist, um aus einer Eingangsgleichspannung durch Wechseln zwischen zwei Schaltzuständen eine Primärwechselspannung des Transformators zu erzeugen. Die Ansteuerungsschaltung ist dazu eingerichtet, die Länge der Totzeit zwischen der Deaktivierung eines ersten Schaltzustands der Schaltzustände und der Aktivierung eines zweiten Schaltzustands der Schaltzustände zu steuern, basierend auf einem mittels eines Sekundärstroms und einer Ausgangsspannung des Sekundärkreises des Transformators sowie eines aktuellen Tastgrads der Eingangsschaltstufe berechneten Wert der Totzeit.

Ein Vorteil der Erfindung ist, dass die gemäß dem Stand der Messung erforderliche Messung der Eingangsspannung sowie des Primärstroms des Transformators entfällt. Dies ist insbesondere deswegen vorteilhaft, weil die Ausgangsspannung sowie der Laststrom oft auf einfachere Weise extern bestimmt werden können, ohne in die Transformatorschaltung einzugreifen, oder weil schon für andere Zwecke vorhandene Messeinrichtungen benutzt werden können.

Gemäß einer Ausführungsform der Erfindung weist die Ansteuerungsschaltung einen Pulsweitenmodulator zur Erzeugung von Ansteuerungsimpulsen für mindestens ein Schalterelement der Eingangsschaltstufe auf.

Bevorzugt weist die Ansteuerungsschaltung eine Rückkopplungsschaltung auf, die mit dem Pulsweitenmodulator gekoppelt ist und einen ersten Teilschaltkreis, der mit der Ausgangsspannung des Sekundärkreises koppelt, und einen zweiten Teilschaltkreis, der mit dem Sekundärstrom koppelt, aufweist.

Ein Vorteil davon ist, dass die erfindungsgemäße Ansteuerungsschaltung vorteilhaft mit einer Rückkopplungsschaltung kombiniert werden kann, wobei Werte für den Sekundärstrom und die Ausgangsspannung schon vorliegen mit den Eingangssignalen der Rückkopplungsschaltung. Diese Größen können zur Verarbeitung in den Pulsweitenmodulator abgezweigt werden.

Ferner kann die Ansteuerungsschaltung gemäß einer Ausführungsform eine Berechnungseinheit zum Berechnen der Totzeit unter Einbeziehung eines aktuellen Tastgrads der Eingangsschaltstufe aufweisen.

Gemäß einer bevorzugten Weiterbildung dieser Ausführungsform weist die Berechnungseinheit einen Zwischenspeicher für den Tastgrad auf. Alternativ oder zusätzlich ist die Berechnungseinheit dazu eingerichtet ist, einen aktuellen Tastgrad aus einem Verlauf des Sekundärstroms und der Ausgangsspannung herzuleiten.

Bevorzugt weist die erfindungsgemäße Ansteuerungsschaltung einen Speicher für ein Kennfeld auf, das die Totzeit als eine Funktion des Sekundärstrom, der Ausgangsspannung und dem Tastgrad beschreibt.

Das erfindungsgemäße Schaltnetzteil weist die erfindungsgemäße Ansteuerungsschaltung auf, wobei die Ansteuerungsschaltung eine Ansteuerung eines nullspannungsschaltenden Vollbrücken- oder Halbbrückenwandlers der Schaltungsanordnung ist.

Das erfindungsgemäße Verfahren ist analog zu dem unabhängigen Vorrichtungsanspruch 1 durch eine Steuerung der Länge der Totzeit basierend auf einem mittels eines Sekundärstroms und einer Ausgangsspannung des Sekundärkreises des Transformators sowie eines aktuellen Tastgrads der Eingangsschaltstufe berechneten Wert der Totzeit gekennzeichnet.

Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:

Figur 1    das Schaltbild eines Hauptschaltkreises eines beispielhaften Leistungswandlers gemäß dem Stand der Technik, bei dem die Erfindung angewandt wird,

Figur 2    ein Schaltdiagramm einer bekannte Ansteuerungsschaltung für eine Eingangsstufe einer Transformator-Verschaltung, inklusive einem Teilschaltbild einer Rückkopplungsschaltung, die mit einer Ausgangsspannung Uo und einem Sekundärstromes Io koppelt, wobei die Totzeit mittels eines gemessenen Primärstromes $I_L$ und einer zugehörigen gespeicherten Nachschlagetabelle erfolgt, gemäß dem Stand der Technik,

Figur 3    ein weiteres bekanntes Schaltdiagramm einer Ansteuerungsschaltung, ähnlich zu dem in Figur 2, wobei die Totzeit anhand des gemessene Primärstroms $I_L$, sowie einer Eingangsspannung Ui und einer Schalterspannung Us berechnet wird, gemäß dem Stand der Technik,

Figur 4    den Verlauf von Ansteuerungssignalen von zwei im Wesentlichen zueinander im Gegentakt angesteuerten Schalterelementen einer Eingangsschaltstufe, mit einem Totzeitanteil td zwischen den Schaltungsimpulsen, gemäß dem Stand der Technik, und

Figur 5     ein Schaltdiagramm einer Ansteuerungsschaltung gemäß einer Ausführungsform der Erfindung.

Ausführungsformen der Erfindung

In den Figuren weisen gleiche Bezugszeichen auf gleiche oder ähnliche Komponenten hin.

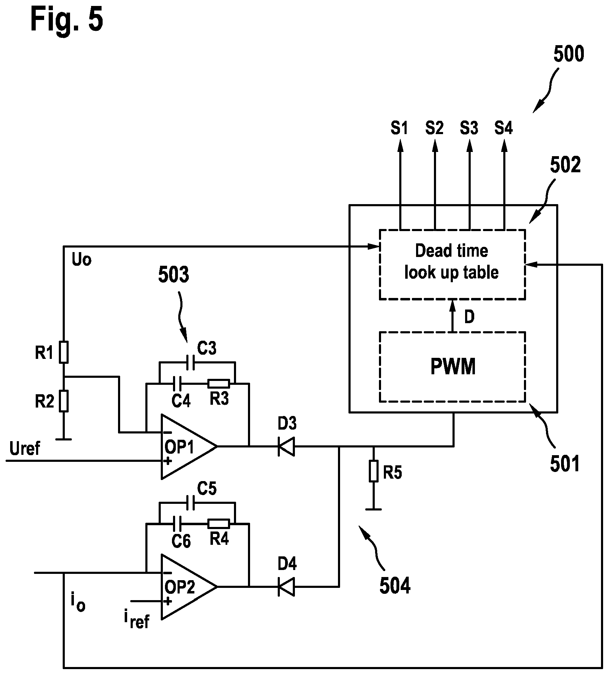

In Figur 5 wird eine Ansteuerungsschaltung 500 gemäß einem Ausführungsbeispiel der Erfindung gezeigt. Im Unterschied zu den in den Figuren 2 und 3 gezeigten Ansteuerungsschaltungen 200, 300 gemäß dem Stand der Technik, müssen bei der erfindungsgemäßen Lösung weder eine primärseitige Gleichspannung, d.h. Eingangsgleichspannung Ui oder Schalterspannung Us, noch der Transformator-Primärstrom $I_L$ gemessen werden. Stattdessen werden die Informationen aus der Ausgangsspannung Uo und dem Laststrom, d.h. dem sekundärseitigem Ausgangsstrom Io verwendet, um eine anpassbare Totzeitsteuerung zu realisieren.

Um einen nullspannungsschaltenden Modus zu erreichen, kann die Totzeit td gemäß der folgenden Formel hergeleitet werden (beispielhaft für die sogenannte resonante Seite einer lagging-leg-passiv-aktiv-Halbbrücke):

$$t_d \approx \frac{8 C_{oss} U_i}{i_L}$$

Die Klemmen-Gleichspannung Ui kann geschrieben werden mit:

$$U_i = \frac{n U_O}{D}$$

Dabei steht n für die Anzahl der Windungen, und D ist der Tastgrad der Eingangsschaltstufe.

Der Ausschaltstrom des Transformators wird berechnet mit:

$$i_L = (I_O - \frac{U_O}{2L}(1 - D)T_S) / n$$

Somit kann die Totzeit abgeleitet werden, beispielsweise unter Verwendung eines Kennfelds bzw. einer Nachschlagtabelle (lookup-table), wobei Uo, Io, und D die Eingabeparameter sind, wie in Figur 5 gezeigt wird.

In dem in Figur 5 gezeigten Ausführungsbeispiel ist eine Rückkopplungsschaltung mit dem Pulsweitenmodulator 501 gekoppelt und weist einen ersten Teilschaltkreis 503, der mit Ausgangsspannung gekoppelt ist, und eine zweiten Teilschaltkreis 504, der mit dem Sekundärstrom Io gekoppelt ist, auf.

Die Länge der Totzeit wird mittels eines in einem Speicher 502 gespeicherten Kennfeldes bestimmt.

Die Ansteuerungsschaltung 500 weist einen Speicher 502 zur Speicherung des Kennfeldes auf, das die Totzeit td als eine Funktion des Sekundärstroms Io, der Ausgangsspannung Uo und dem Tastgrad D beschreibt. Die Speicherung des Kennfeldes und die Herleitung der Totzeit td kann mittels einer komplexen programmierbaren logischen Vorrichtung CPLD (Englisch: Compex Programmable Logic Device) bzw. einer programmierbaren logischen Anordnung PLA vorgenommen werden.

Der Pulsweitenmodulator 501 gibt Ansteuerungsimpulse an die Schalterelemente S1, S2, S3, S4 aus gemäß den Werten aus dem Kennfeld.

Obgleich gemäß dem in Figur 5 gezeigten Ausführungsbeispiel ein Kennfeld verwendet wird, ist die Erfindung jedoch nicht darauf beschränkt. Zusätzlich oder alternativ weist die Ansteuerungseinheit gemäß einem anderen Ausführungsbeispiel der Erfindung eine Berechnungseinheit auf, die dazu eingerichtet ist, einen aktuellen Tastgrad D aus einem detektierten Verlauf des Sekundärstroms Io und der Ausgangsspannung Uo herzuleiten.

Die Erfindung findet Anwendung beispielsweise in einer Transformator-Verschaltung, wie sie in Figur 1 gezeigt ist. Jedoch ist die Erfindung nicht auf einen Resonanzwandlerkreis beschränkt, sondern kann auch auf andere Transformatorschaltungen angewandt werden, bei denen die Schalterelemente so angesteuert werden sollen, dass ein Nullspannungsschaltmodus erreicht wird

Die erfindungsgemäße Ansteuerungsschaltung kann in einem Schaltnetzteil verwendet werden, ist jedoch nicht darauf beschränkt. Gemäß einem Aspekt der Erfindung kann die erfindungsgemäße Ansteuerungsschaltung, insbesondere die in Figur 5 gezeigte Ansteuerungsschaltung 500, Teil einer allgemeinen Schaltungsanordnung sein, die einen Transformator 101 mit einer Primärwicklung 104 und mindestens einer Sekundärwicklung 105 aufweist, und ferner eine mit der Primärwicklung 104 des Transformators gekoppelte Eingangsschaltstufe 102 aufweist, die dazu eingerichtet ist, durch Wechseln zwischen zwei Schaltzuständen aus einer Eingangsgleichspannung eine Primärwechselspannung des Transformators zu erzeugen. Außerdem hat die Schaltungsanordnung einen mit der Sekundärspule 105 des Transformators 101 gekoppelten Sekundärkreis 103 zum Ansteuern der Eingangsschaltstufe 102.

Zusammenfassend ist die Ansteuerungsschaltung 500 dazu eingerichtet, die Länge der Totzeit td zwischen der Deaktivierung einer der Schaltzustände und der Aktivierung eines anderen der Schaltzustände zu steuern, basierend auf die Größen eines Sekundärstroms Io und einer Ausgangsspannung Uo des Sekundärkreises 103 des Transformators 101.

Der in Figur 1 gezeigte Transformator weist zwar eine zweigeteilte Sekundärwicklung 105 auf. Jedoch kann die Erfindung auch auf Transformatorschaltungen mit einer einzelnen Sekundärwicklung angewandt werden, wobei die Gleichrichtung auf eine andere Weise erfolgen kann, beispielsweise mittels eines Brückengleichrichters. Auch ist die Erfindung nicht auf MOSFETs beschränkt sondern kann stattdessen, je nach Anwendung, auch auf andere geeignete Schalterelemente, wie beispielsweise andere Arten von Halbleiterschaltern, oder Leistungsschütze angewandt werden.

Ein Fachmann erkennt, dass die Erfindung anwendungsspezifisch variiert werden kann. Der Rahmen der Erfindung ist nur durch die Ansprüche definiert.

**Patentansprüche**

**1.** Ansteuerungsschaltung (500), für eine mit der Primärwicklung (104) eines Transformators (101) gekoppelte Eingangsschaltstufe (102) zum Erzeugen einer Primärwechselspannung des Transformators (101) aus einer Eingangsgleichspannung (Ui) durch Wechseln zwischen zwei Schaltzuständen, dazu eingerichtet, die Länge der Totzeit (td) zwischen der Deaktivierung eines ersten Schaltzustands der Schaltzustände und der Aktivierung eines zweiten Schaltzustands der Schaltzustände zu steuern, **dadurch gekennzeichnet, dass** die Ansteuerung (500) ferner dazu eingerichtet ist, das Steuern der Länge der Totzeit (td) basierend auf einem mittels eines Sekundärstroms (Io) und einer Ausgangsspannung (Uo) des Sekundärkreises (103) des Transformators (101) sowie eines aktuellen Tastgrads (D) der Eingangsschaltstufe (102) berechneten Wert der Totzeit (td) durchzuführen.

**2.** Ansteuerungsschaltung (500) nach Anspruch 1, aufweisend: einen Pulsweitenmodulator (501) zur Erzeugung von Ansteuerungsimpulsen für mindestens ein Schalterelement (S1, S2, S3, S4) der Eingangsschaltstufe (102).

**3.** Ansteuerungsschaltung (500) nach Anspruch 2, aufweisend: eine Rückkopplungsschaltung, die mit dem Pulsweitenmodulator (501) gekoppelt ist und einen ersten Teilschaltkreis (503), der mit der Ausgangsspannung (Uo) des Sekundärkreises (103) gekoppelt ist, und eine zweiten Teilschaltkreis (504), der mit dem Sekundärstrom (Io) gekoppelt ist, aufweist.

**4.** Ansteuerungsschaltung (500) nach einem der vorhergehenden Ansprüche, aufweisend eine Berechnungseinheit zum Berechnen der Totzeit (td) unter Einbeziehung eines aktuellen Tastgrads (D) der Eingangsschaltstufe (102).

**5.** Ansteuerungsschaltung (500) nach Anspruch 4, wobei die Berechnungseinheit einen Zwischenspeicher für den Tastgrad (D) aufweist und/oder dazu eingerichtet ist, einen aktuellen Tastgrad aus einem von der Ansteuerungseinheit (500) detektierten Verlauf des Sekundärstroms (Io) und der Ausgangsspannung (Uo) herzuleiten.

**6.** Ansteuerungsschaltung (500) nach einem der vorhergehenden Ansprüche, ferner aufweisend einen Speicher (502) für ein Kennfeld, das die Totzeit (td) als eine Funktion des Sekundärstrom (Io), der Ausgangsspannung (Uo), und dem Tastgrad (D) beschreibt.

**7.** Schaltnetzteil mit der Ansteuerungsschaltung (500) nach einem der vorhergehenden Ansprüche, wobei die Ansteuerungsschaltung (500) eine Ansteuerung eines nullspannungsschaltenden Vollbrücken- oder Halbbrückenwandlers der Schaltungsanordnung ist.

**8.** Verfahren zur Ansteuerung der Schalterelemente (S1, S2, S3, S4) einer mit der Primärwicklung eines Transformators (101), insbesondere in einen Schaltnetzteil, gekoppelten Eingangsschaltstufe (102), die durch Wechseln zwischen zwei Schaltzuständen eine Primärwechselspannung des Transformators (101) aus einer Eingangsgleichspannung (Ui) erzeugt, wobei bei dem Verfahren die Länge der Totzeit (td) zwischen der Deaktivierung einer der Schaltzustände und der Aktivierung eines anderen der Schaltzustände gesteuert wird, **dadurch gekennzeichnet, dass** das Steuern der Länge der Totzeit (td) basierend auf einem mittels eines Sekundärstrom (Io) und einer Ausgangsspannung (Uo) des Sekundärkreises (103) des Transformators (101) sowie eines aktuellen Tastgrads (D) der Eingangsschaltstufe (102) berechneten Wert der Totzeit (td) erfolgt.

**9.** Verfahren nach Anspruch 8, wobei die Berechnung der Totzeit (td) mittels eines zwischenspeicherten Wertes für den Tastgrad (D) erfolgt und/oder ein aktueller Tastgrad aus einem detektierten Verlauf des Sekundärstroms (Io) und der Ausgangsspannung (Uo) hergeleitet wird.

**Claims**

**1.** Driving circuit (500), for an input switching stage (102) - coupled to the primary winding (104) of a transformer (101) - for generating a primary AC voltage of the transformer (101) from an input DC voltage (Ui) by changing between two switching states, configured to control the length of the dead time (td) between the deactivation of a first switching state of the switching states and the activation of a second switching state of the switching states, **characterized in that** the drive (500) is furthermore configured to carry out the control of the length of the dead time (td) on the basis of a value of the dead time (td) that is calculated by means of a secondary current (Io) and an output voltage (Uo) of the secondary circuit (103) of the transformer (101) and also a present duty factor (D) of the input switching stage (102).

2. Driving circuit (500) according to Claim 1, comprising: a pulse width modulator (501) for generating driving pulses for at least one switch element (S1, S2, S3, S4) of the input switching stage (102).

3. Driving circuit (500) according to Claim 2, comprising: a feedback circuit, which is coupled to the pulse width modulator (501) and comprises a first subcircuit (503), which is coupled to the output voltage (Uo) of the secondary circuit (103), and a second subcircuit (504), which is coupled to the secondary current (Io).

4. Driving circuit (500) according to any of the preceding claims, comprising a calculation unit for calculating the dead time (td) with inclusion of a present duty factor (D) of the input switching stage (102) .

5. Driving circuit (500) according to Claim 4, wherein the calculation unit comprises a buffer memory for the duty factor (D) and/or is configured to derive a present duty factor from a profile of the secondary current (Io) and the output voltage (Uo), said profile being detected by the driving unit (500) .

6. Driving circuit (500) according to any of the preceding claims, furthermore comprising a memory (502) for a family of characteristic curves that describes the dead time (td) as a function of the secondary current (Io), the output voltage (Uo) and the duty factor (D).

7. Switched-mode power supply comprising the driving circuit (500) according to any of the preceding claims, wherein the driving circuit (500) is a drive of a zero voltage switching full-bridge or half-bridge converter of the circuit arrangement.

8. Method for driving the switch elements (S1, S2, S3, S4) of an input switching stage (102) which is coupled to the primary winding of a transformer (101), in particular into a switched-mode power supply, and which generates a primary AC voltage of the transformer (101) from an input DC voltage (Ui) by changing between two switching states, wherein the method involves controlling the length of the dead time (td) between the deactivation of one of the switching states and the activation of another of the switching states, **characterized in that** the control of the length of the dead time (td) is effected on the basis of a value of the dead time (td) that is calculated by means of a secondary current (Io) and an output voltage (Uo) of the secondary circuit (103) of the transformer (101) and also a present duty factor (D) of the input switching stage (102).

9. Method according to Claim 8, wherein the calculation of the dead time (td) is effected by means of a buffer-stored value for the duty factor (D) and/or a present duty factor is derived from a detected profile of the secondary current (Io) and the output voltage (Uo).

**Revendications**

1. Circuit de commande (500), pour un étage de commutation à l'entrée (102), lequel est couplé avec le bobinage primaire (104) d'un transformateur (101), en vue de la génération d'une tension alternative primaire du transformateur (101) à partir d'une tension alternative à l'entrée (Ui), par la commutation entre deux états de commutation ; lequel circuit de commande est configuré en vue de commander la longueur du temps mort (td) entre la désactivation d'un premier état de commutation des états de commutation et l'activation d'un deuxième état de commutation des états de commutation ; **caractérisé en ce que** la commande (500) est en outre configuré en vue de réaliser le pilotage de la longueur du temps mort (td), en se basant sur une valeur du temps mort (td), laquelle est calculée au moyen d'un courant secondaire (Io) et d'une tension à la sortie (Uo) du circuit secondaire (103) du transformateur (101), ainsi qu'au moyen d'un rapport cyclique (D) actualisé de l'étage de commutation à l'entrée (102).

2. Circuit de commande (500) selon la revendication 1, lequel présente un modulateur d'impulsions en largeur (501) destiné à la génération d'impulsions de commande pour au moins un élément de commutateur (S1, S2, S3, S4) de l'étage de commutation à l'entrée (102).

3. Circuit de commande (500) selon la revendication 2, présentant un circuit de contre-réaction qui est couplé avec le modulateur d'impulsions en largeur (501) et avec un premier circuit partiel de commutation (503), lequel est couplé à la tension à la sortie (Uo) du circuit secondaire (103), et présentant également un deuxième circuit partiel de commutation (504), lequel est couplé avec le courant secondaire (Io).

4. Circuit de commande (500) selon l'une des revendications précédentes, présentant une unité de calcul destinée au calcul du temps mort (td) en tenant compte d'un rapport cyclique (D) actualisé de l'étage de commutation à l'entrée (102).

5. Circuit de commande (500) selon la revendication 4, dans lequel l'unité de calcul présente une mémoire tampon pour le rapport cyclique (D) et/ou est configurée en vue de déduire un rapport cyclique actualisé à partir d'un trajet, lequel est détecté par l'unité de commande (500), du courant secondaire (Io) et de la tension à la sortie (Uo) .

6. Circuit de commande (500) selon l'une des revendications précédentes, lequel présente en outre une mémoire (502) pour un diagramme caractéristique qui décrit le temps mort (td) sous la forme d'une fonction du courant secondaire (Io), de la tension à la sortie (Uo) et du rapport cyclique (D).

7. Alimentation à découpage avec le circuit de commande (500) selon l'une des revendications précédentes, selon laquelle le circuit de commande (500) est une commande d'un convertisseur à pont intégral ou d'un convertisseur à demi-pont, par commutation au zéro de la tension, de la configuration du circuit.

8. Procédé destiné à la commande des éléments de commutateur (S1, S2, S3, S4) d'un étage de commutation à l'entrée (102), lequel est couplé avec le bobinage primaire d'un transformateur (101), en particulier dans une alimentation à découpage, et lequel génère une tension alternative primaire du transformateur (101) à partir d'une tension continue à l'entrée (Ui), par la commutation entre deux états de commutation ; dans lequel la longueur du temps mort (td) entre la désactivation de l'un des états de commutation et l'activation d'un autre des états de commutation est commandée pour le procédé ; **caractérisé en ce que** la commande de la longueur du temps mort (td) a lieu en se basant sur une valeur du temps mort (td), laquelle est calculée au moyen d'un courant secondaire (Io) et d'une tension à la sortie (Uo) du circuit secondaire (103) du transformateur (101), ainsi qu'au moyen d'un rapport cyclique (D) actualisé de l'étage de commutation à l'entrée (102).

9. Procédé selon la revendication 8, dans lequel le calcul du temps mort (td) est réalisé au moyen d'une valeur mise en mémoire tampon pour le rapport cyclique (D) et/ou un rapport cyclique actualisé est déduit à partir d'un trajet détecté du courant secondaire (Io) et de la tension à la sortie (Uo).

**Fig. 1**
**Stand der Technik**

# Fig. 2
## Stand der Technik

# Fig. 3
## Stand der Technik

Fig. 4
Stand der Technik

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100020569 A
- JP 2008263735 A
- US 2011149607 A1
- US 6002213 A
- US 2008019153 A1